# EUROPÄISCHE PATENTSCHRIFT

(11) **EP 0 416 610 B1**
(45) Veröffentlichungstag und Bekanntmachung des Hinweises auf die Patenterteilung: **11.08.1993**
(21) Anmeldenummer: 90117174.4
(22) Anmeldetag: 06.09.1990
(51) Int. Cl.: B23B 29/24

(54) **Werkzeugträgeranordnung, insbesondere für Drehmaschinen, mit auswechselbaren Werkzeughaltern**
Toolholder for a machine tool, especially for turning machines, with interchangeable tool holder
Porte-outil, notamment pour tours, avec porte-outil interchangeable

(30) Priorität: 07.09.1989 DE 3929802
(43) Veröffentlichungstag der Anmeldung: 13.03.1991
(73) Patentinhaber: Traub AG, 73262 Reichenbach (DE)
(72) Erfinder: Ströbele, Willi, D-7317 Wendlingen (DE)
(74) Vertreter: Goetz, Rupert, Dipl.-Ing.

(56) Entgegenhaltungen:
- DE-A- 3 434 202
- DE-B- 1 813 142
- GB-A- 2 054 435
- GB-A- 2 214 461

## Beschreibung

Die Erfindung betrifft eine Werkzeugträgeranordnung, insbes. für Drehmaschinen, mit
- einem Werkzeugträger, insbes. Revolverkopf, der zwischen zwei Stirnflächen mehrere Aufspannflächen aufweist, von denen je ein Einsteckloch ausgeht,
- mehreren auswechselbaren Werkzeughaltern, die je ein Gehäuse mit einer Anlagefläche zum Anlegen an eine der Aufspannflächen sowie je einen Schaft zum Einstecken in je eines der Einstecklöcher aufweisen, und
- Schaftspannern, die je einem der Einstecklöcher zugeordnet und zum Festziehen eines eingesteckten Schafts ausgebildet sind.

Solche Kombinationen eines Werkzeugträgers mit einem oder mehreren Werkzeughaltern sind aus dem Normblatt DIN 69 880 vom September 1983 bekannt. Dabei ist der Schaft jedes Werkzeughalters zahnstangenartig verzahnt, und als Schaftspanner ist ein entsprechend verzahnter, im Werkzeugträger geführter Bolzen vorgesehen. Der Werkzeugträger weist an jeder seiner Aufspannflächen eine zum Einsteckloch parallele Bohrung auf, aus der eine Paßhülse herausragt. Die Werkzeughalter haben in ihrem Gehäuse eine zu ihrem Schaft parallele Bohrung, in welche die zugehörige Paßhülse eingreift. Auf diese Weise ist jeder Werkzeughalter in einer bestimmten Stellung festgelegt, jedoch nur mit einer Genauigkeit, die höheren Anforderungen nicht genügt.

Der Erfindung liegt die Aufgabe zugrunde, einen Werkzeugträger und mindestens einen zugehörigen Werkzeughalter der beschriebenen Gattung derart weiterzubilden, daß der Werkzeughalter mit besonders großer und auch nach dem Auswechseln reproduzierbarer Genauigkeit in mindestens einer vorbestimmten Winkelstellung ihres Schafts in einem beliebigen Einsteckloch des Werkzeugträgers festgelegt werden können.

Die Aufgabe ist erfindungsgemäß ausgehend von einer Werkzeugträgeranordnung der eingangs beschriebenen Gattung dadurch gelöst, daß mindestens einer der Werkzeughalter zwei seitliche Ansätze aufweist, die über je einen Stirnflächenrand des Werkzeugträgers greifen und sich an ihm abstützen, und daß an jedem der seitlichen Ansätze ein Einstellglied gelagert ist, das gegen den benachbarten Stirnflächenrand des Werkzeugträgers spannbar und derart angeordnet ist, daß es in gespanntem Zustand eine in bezug auf den zugehörigen Schaft exzentrische Reaktionskraft auf den Werkzeughalter ausübt.

Es ist ferner zweckmäßig, wenn die Stirnflächenränder des Werkzeugträgers in ihren mit den Einstellgliedern zusammenwirkenden Bereichen nach außen, zu den Aufspannflächen hin, konvergierende Schrägflächen sind. Daraus ergibt sich die Möglichkeit, die Einstellglieder für wiederholte Verwendungen des zugehörigen Werkzeughalters derart einzustellen, daß sie gegen die nach außen konvergierenden Schrägflächen der Stirnflächenränder in genau definierter Weise vorgespannt werden, wenn der Schaft des Werkzeughalters in einem Einsteckloch axial festgespannt wird, bis die Anlagefläche am Gehäuse in der vorgesehenen Weise an der zugehörigen Aufspannfläche des Werkzeugträgers anliegt. Auf diese Weise läßt sich jegliches Drehspiel des Werkzeughalters ein für allemal ausschalten.

Die Einstellglieder sind vorzugsweise Schrauben; möglich ist aber auch die Verwendung von Exzentern od.dgl.

Eine weitere vorteilhafte Ausgestaltung der Erfindung beschreibt der Anspruch 4.

Ein Ausführungsbeispiel der Erfindung wird im folgenden anhand schematischer Zeichnungen mit weiteren Einzelheiten erläutert. Es zeigen:
- Fig. 1: einen Werkzeugrevolver für einen Drehautomaten, teilweise in einem axialen Schnitt,
- Fig. 2: den Schnitt II-II in Fig. 1,
- Fig. 3: den Schnitt III-III in Fig. 1,
- Fig. 4: die Ansicht in Richtung des Pfeils IV in Fig. 1,
- Fig. 5: den Schnitt V-V in Fig. 4 und
- Fig. 6: einen vergrößerten Ausschnitt aus Fig. 1.

Der dargestellte Werkzeugrevolver hat einen Revolverkörper 10, der an einem Schlitten 12 einer üblichen Kreuzschlittenanordnung eines Drehautomaten befestigt ist; dies bedeutet, daß der Revolverkörper 10 mit dem Schlitten 12 längs zweier zueinander rechtwinkliger Achsen X und Z verstellbar ist, von denen die Achse Z die Achsrichtung der Hauptspindel des Drehautomaten darstellt. Am Revolverkörper 10 ist ein Werkzeugträger in Gestalt eines Revolverkopfes 14 gelagert, der eine Innenverzahnung 15 aufweist und in üblicher Weise mittels eines in diese eingreifenden, nicht dargestellten Ritzels um eine Revolverachse 16 drehbar ist, wenn er eine Schaltstellung einnimmt. Aus der Schaltstellung ist der Revolverkopf 14 in ebenfalls üblicher Weise, z.B. hydraulisch, längs der Revolverachse 16 in die abgebildete Haltestellung bewegbar, in der eine an ihm ausgebildete Planverzahnung 17 in eine komplementäre Planverzahnung des Revolverkörpers 10 eingreift.

Der Revolverkopf 14 hat eine freie Stirnfläche 18 und eine dem Revolverkörper 10 zugewandte ringförmige Stirnfläche 20, die radial nach außen konvergierende, ebene Stirnflächenränder 22 und 24 aufweisen. Der Umfang des Revolverkopfes 14 ist polygonal aus mehreren, im dargestellten Beispiel zwölf, ebenen Aufspannflächen 26 zusammengesetzt. im dargestellten Beispiel erstreckt sich die Revolverachse 16 parallel zur Z-Achse der Drehmaschine, wie dies bei Trommelrevolvern üblich ist; die Aufspannflächen 26 sind jedoch parallel zur Revolverachse 16 angeordnet, wie dies bei Sternrevolvern üblich ist.

Der erfindungsgemäße Werkzeugrevolver kann auch in der Art eines Kronenrevolvers ausgestaltet sein; dabei erstreckt sich die Revolverachse 16 unter einem Winkel von beispielsweise 30° zur Z-Achse, und jede der Aufspannflächen ist unter einem zu diesem Winkel komplementären Winkel gegen die Revolverachse 16 geneigt angeordnet.

In der Mitte jeder Aufspannfläche 26 ist ein zylindrisches Einsteckloch 28 in den Revolverkopf 14 eingearbeitet. Im dargestellten Beispiel schneiden die geometrischen Achsen sämtlicher Einstecklöcher 28 die Revolverachse 16 unter einem rechten Winkel. In einem geringen Abstand parallel zu jedem Einsteckloch 28 ist im Revolverkopf 14 eine Bohrung 32 angeordnet, die an eine nicht dargestellte Kühlmittelpumpe angeschlossen ist. Diese fördert beispielsweise eine Schneidemulsion üblicher Zusammensetzung.

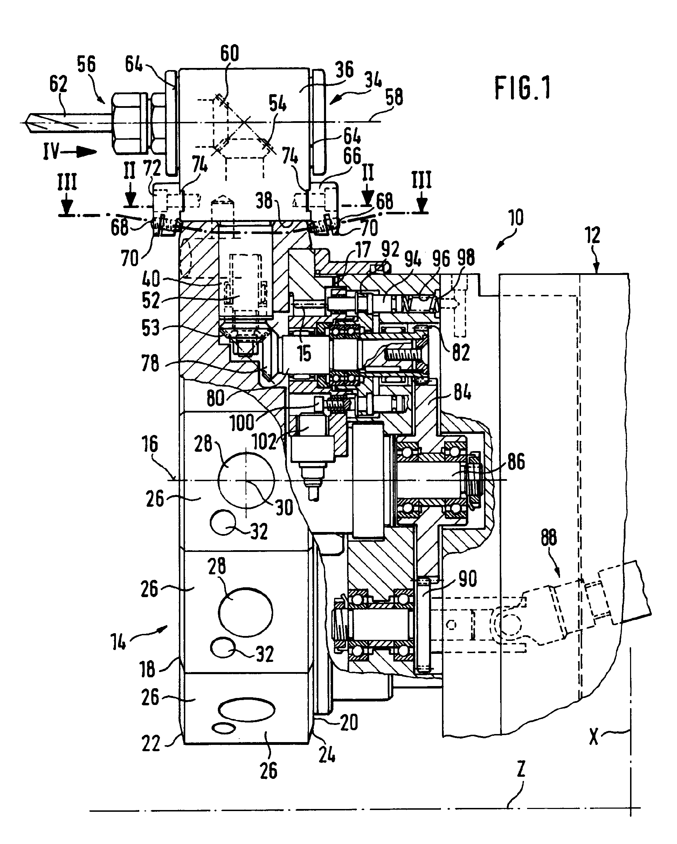

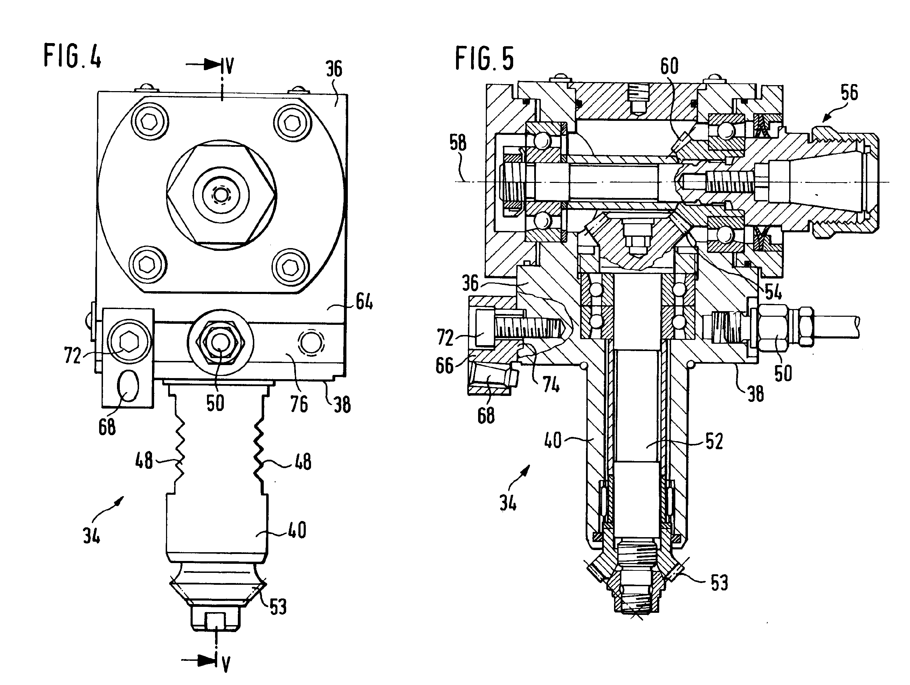

An den Aufspannflächen 26 des Revolverkopfes 14 lassen sich bis zu zwölf Werkzeughalter befestigen; in Fig. 1 bis 6 ist ein Beispiel eines solchen Werkzeughalters 34 dargestellt.

Der Werkzeughalter 34 hat ein im wesentlichen quaderförmiges Gehäuse 36 mit einer ebenen Anlagefläche 38, von der sich mittig und rechtwinklig ein Schaft 40 wegerstreckt. Der Schaft 40 paßt in jedes der Einstecklöcher 28 des Revolverkopfes 14; im montierten Zustand des Werkzeughalters 34 liegt dessen Anlagefläche 38 an der Aufspannfläche 26 rings um das betreffende Einsteckloch 28 vollflächig an. Zum Befestigen des Schafts 40 ist im Revolverkopf 14 tangential zu jedem Einsteckloch 28 eine Befestigungsbohrung 42 angeordnet; in dieser ist mittels einer Spannschraube 44 ein keilförmiger Bolzen 46 befestigt, der verzahnt ist und in eine zahnstangenartige Verzahnung 48 des betreffenden Schafts 40 eingreift.

Soweit bisher beschrieben, sind der Werkzeughalter 34 und seine Befestigung am Revolverkopf 14 bekannt; sie entsprechen der Norm DIN 69 880.

Erfindungsgemäß weist der Schaft 40 des dargestellten Werkzeughalters 34 diametral gegenüber der Verzahnung 48, also gegenüber dieser um 180° versetzt, eine weitere, vollständig gleiche Verzahnung 48 auf. Infolgedessen läßt sich der Werkzeughalter 34 wahlweise in der aus Fig. 1 ersichtlichen Stellung oder in einer bezüglich der Achse des gewählten Einstecklochs 28 um 180° gedrehten Stellung am Revolverkopf 14 befestigen.

Von der Anlagefläche 38 des Gehäuses 36 gehen zwei Kühlmittelkanäle 49 aus, die in bezug auf den Schaft 40 einander diametral gegenüberliegen. Die Kühlmittelkanäle 49 sind so angeordnet, daß in jeder der beiden möglichen Stellungen des Werkzeughalters 34 einer dieser Kühlmittelkanäle 49 an die Bohrung 32 angeschlossen ist, die in der zugehörigen Aufspannfläche 26 mündet. An die beiden Kühlmittelkanäle 49 ist eine Kühlmitteldüse 50 angeschlossen, die in das Gehäuse 36 eingeschraubt ist. Die Kühlmitteldüse 50 kann somit in jeder der beiden Stellungen des Werkzeughalters 34 über die zugehörige Bohrung 32 mit einem Kühlmittel versorgt werden. In der Bohrung 32 kann eine Paßhülse 51 stecken, die je nach Anordnung des Werkzeughalters 34 in den einen oder anderen seiner beiden Kühlmittelkanäle 49 eingreift und dadurch den Werkzeughalter 34 gegen Verdrehen sichert.

Im Gehäuse 36 und im Schaft 40 des Werkzeughalters 34 ist gleichachsig mit dem Schaft 40 eine Spindel 52 gelagert, die an ihren beiden Enden je ein Zahnrad 53 bzw. 54 trägt; im dargestellten Beispiel sind beide Kegelräder. Quer zur Spindel 52 ist im Gehäuse 36 eine Einspannvorrichtung 56 gelagert; deren Achse 58 die Achse des Schafts 40 unter einem rechten Winkel schneidet. An der Einspannvorrichtung 56 ist ein Kegelrad 60 ausgebildet, das mit dem Kegelrad 54 kämmt. In der Einspannvorrichtung 56 ist ein Werkzeug 62, im dargestellten Beispiel ein Bohrer, gespannt.

Die Befestigung des Schafts 40 mittels des Bolzens 46 genügt zwar, um die Anlagefläche 38 des Werkzeughalters 34 an der gewählten Aufspannfläche 26 des Revolverkopfes 14 fest anliegend zu halten; für eine präzise Ausrichtung des Werkzeugs 62 besteht damit jedoch noch keine ausreichende Gewähr. Nach dem erwähnten Normblatt DIN 69880 soll deshalb in der Bohrung 32 die erwähnte Paßhülse 51 stecken, die mit enger Passung in eine entsprechende Bohrung im Gehäuse 36 des Werkzeughalters 34 eingreift und diesen in einer vorbestimmten Winkelstellung in bezug auf die Achse 30 festlegen soll. Die Paßhülse 51 ist jedoch gegen Querkräfte und Biegemomente nicht besonders widerstandsfähig. Starke Belastungen des Werkzeughalters 34 durch Zerspanungskräfte können deshalb dazu führen, daß das Werkzeug 62 nicht genau in der gewünschten Richtung - in der Regel parallel zur Z-Achse - stehenbleibt. Deshalb wird die Paßhülse 51 durch die folgenden Maßnahmen ergänzt, die es ermöglichen, den Werkzeughalter 34, und somit das Werkzeug 62, mit höchster Genauigkeit einzustellen und sicher festzuhalten.

Das Gehäuse 36 des Werkzeughalters 34 hat an seinen beiden Stirnseiten 64, die mit je einer der Stirnflächen 18 und 20 des Revolverkopfes 14 mindestens annähernd in einer gemeinsamen Ebene liegen, je einen seitlichen Ansatz 66, von dem aus ein Einstellglied 68 gegen den benachbarten Stirnflächenrand 22 bzw. 24 des Revolverkopfes 14 spannbar ist. Die Einstellglieder 68 sind im dargestellten Beispiel Schrauben, die rechtwinklig zum zugehörigen Stirnflächenrand 22 bzw. 24 in den betreffenden Ansatz 66 eingeschraubt sind. Jeder Ansatz 66 hat einen federnden Vorsprung 70, durch den das zugehörige Einstellglied 68 hindurchgeschraubt ist, und der durch eine Madenschraube 71 unter axialer Spannung gehalten ist, so daß das Einstellglied 68 gegen unbeabsichtigtes Drehen gesichert ist.

Die Ansätze 66 können einstückig am Gehäuse 36 ausgebildet sein; im dargestellten Beispiel handelt es sich jedoch um getrennte Bauteile, die mit je einer Schraube 72 am Gehäuse 36 befestigt sind und je eine Fußrippe 74 aufweisen, die in eine komplementäre Nut 76 an der betreffenden Stirnseite 64 des Gehäuses 36 eingreift, wodurch der Ansatz 66 daran gehindert ist, sich um die Schraube 72 zu drehen.

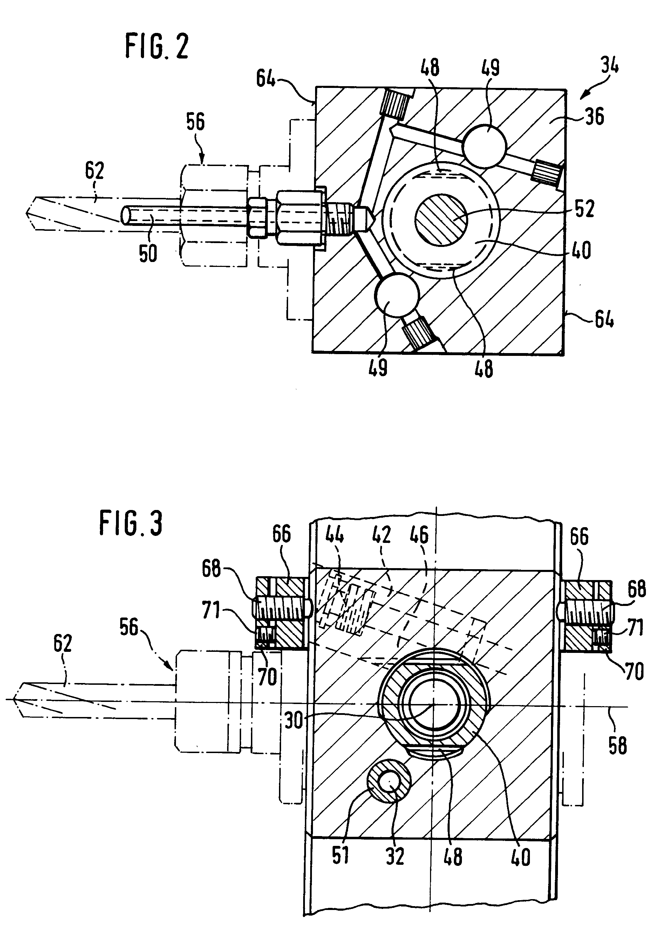

Die beiden seitlichen Ansätze 66 sind gemäß Fig. 3 auf einer und derselben Seite der gemeinsamen Ebene der beiden Achsen 30 und 58 angeordnet. Deshalb bewirkt ein Spannen des in Fig. 3 rechten Einstellgliedes 68 eine Schwenkung des Werkzeughalters 34 im Uhrzeigersinn, während ein Spannen des in Fig. 3 linken Einstellgliedes 68 eine Schwenkung entgegen dem Uhrzeigersinn bewirkt. Mit den Einstellgliedern 68 beider seitlichen Ansätze 66 läßt sich somit der Werkzeughalter 34 so einstellen, daß das Werkzeug 62 genau in der gewünschten Weise ausgerichtet ist, insbes. parallel zur Z-Achse.

Die Genauigkeit dieser Ausrichtung geht nicht verloren, wenn der Werkzeughalter 34 vom Revolverkopf 14 getrennt und später wieder an derselben oder einer anderen Aufspannfläche 26 des Revolverkopfes 14 befestigt wird. An den Einstellgliedern 68 braucht dabei nichts geändert zu werden, da sie mit je einem der schrägen Stirnflächenränder 22 und 24 zusammenwirken und deshalb das Abnehmen und Wiederanbringen des Werkzeughalters 34 nicht behindern. Wenn die Einstellglieder 68 vorhanden und eingestellt sind, kann die Paßhülse 51 mit verhältnismäßig loser Passung in den einen oder anderen Kühlmittelkanal 49 eingreifen, da sie nur noch zum Einleiten von Kühlflüssigkeit in den Werkzeughalter 34 dient.

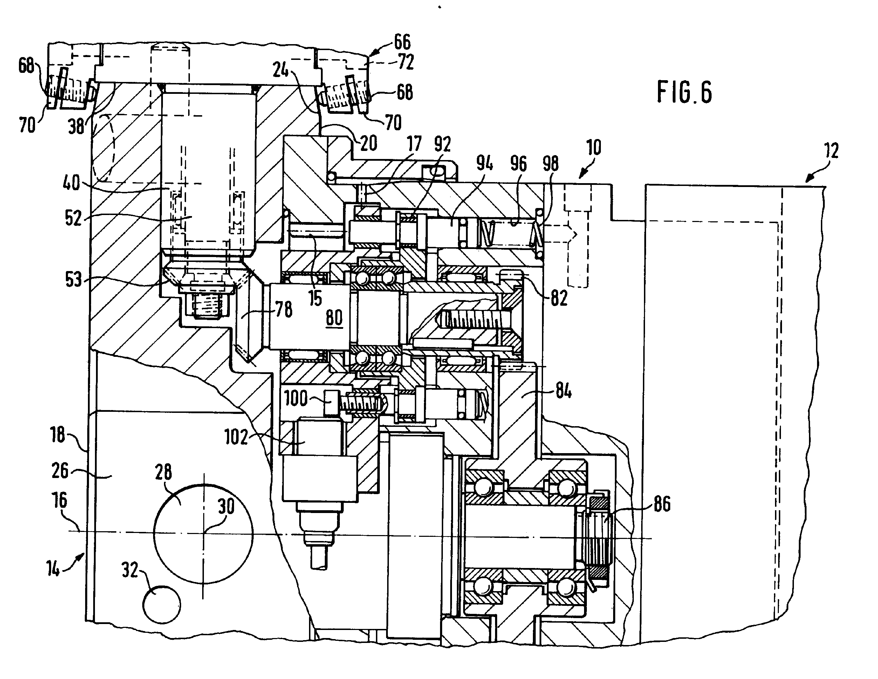

Das in bezug auf den Revolverkopf 14 radial innere Zahnrad 53 der Spindel 52 kämmt in einer Betriebsstellung gemäß Fig. 1 und 6 mit einem ebenfalls als Kegelrad ausgebildeten Zahnrad 78 an einem Ende einer Antriebswelle 80, die im Revolverkörper 10 parallel zur Revolverachse 16 gelagert und über ein an ihrem anderen Ende ausgebildetes, schrägverzahntes Zahnrad 82 von einem ebenfalls schrägverzahnten zentralen Zahnrad 84 antreibbar ist. Das zentrale Zahnrad 84 ist auf einem Wellenzapfen 86 des Revolverkopfes 14 gelagert und von einem nicht dargestellten Antrieb über eine Gelenkwelle 88 und ein im Revolverkörper gelagertes Ritzel 90 antreibbar.

Die Antriebswelle 80 ist zusammen mit einem Ring 92 im Revolverkörper 10 axial verschiebbar. Am Ring 92 sind, einander in bezug auf die Antriebswelle 80 diametral gegenüber, zwei Kolben 94 befestigt, die in je einer Zylinderbohrung 96 arbeiten. Die beiden Zylinderbohrungen 96 enthalten je eine Feder 98, die bestrebt ist, die Kolben 94, und somit auch die Antriebswelle 80, in ihrer abgebildeten Stellung zu halten, in der die beiden Zahnräder 53 und 78 miteinander in Eingriff stehen, die Spindel 52 also mit der Antriebswelle 80 gekuppelt ist. In dieser Stellung wird die Antriebswelle 80 im Betrieb dadurch festgehalten, daß in die beiden Zylinderbohrungen 96 ein Fluid unter Druck eingeleitet wird.

An einem der beiden Kolben 94 ist eine Einstellschraube 100 befestigt, die einem Sensor 102 zugeordnet ist. Erst wenn die Antriebswelle 80 ihre eingerückte Stellung einnimmt, gibt der Sensor 102 ein Signal ab, das über ein nicht dargestelltes Ventil das Fluid unter Druck in die beiden Zylinderbohrungen 96 einströmen läßt. Das Einrücken selbst wird also nur von den verhältnismäßig schwachen Federn 98 bewirkt.

## Patentansprüche

1. Werkzeugträgeranordnung, insbes. für Drehmaschinen, mit
- einem Werkzeugträger, insbes. Revolverkopf (14), der zwischen zwei Stirnflächen (18, 20) mehrere Aufspannflächen (26) aufweist, von denen je ein Einsteckloch (28) ausgeht,
- mehreren auswechselbaren Werkzeughaltern (34), die je ein Gehäuse (36) mit einer Anlagefläche (38) zum Anlegen an eine der Aufspannflächen (26) sowie je einen Schaft (40) zum Einstecken in je eines der Einstecklöcher (28) aufweisen, und
- Schaftspannern (44, 46), die je einem der Einstecklöcher (28) zugeordnet und zum Festziehen eines eingesteckten Schafts (40) ausgebildet sind,
dadurch **gekennzeichnet,** daß
- mindestens einer der Werkzeughalter (34) zwei seitliche Ansätze (66) aufweist, die über je einen Stirnflächenrand (22, 24) des Werkzeugträgers (14) greifen und sich an ihm abstützen, und
- an jedem der seitlichen Ansätze (66) ein Einstellglied (68) gelagert ist, das gegen den benachbarten Stirnflächenrand (22, 24) des Werkzeugträgers (14) spannbar und derart angeordnet ist, daß es in gespanntem Zustand eine in bezug auf den zugehörigen Schaft (40) exzentrische Reaktionskraft auf den Werkzeughalter (34) ausübt.

2. Werkzeugträgeranordnung nach Anspruch 1,
dadurch **gekennzeichnet,** daß die Stirnflächenränder (22, 24) des Werkzeugträgers (14) in ihren mit den Einstellgliedern (68) zusammenwirkenden Bereichen radial nach außen konvergierende Schrägflächen sind.

3. Werkzeugträgeranordnung nach Anspruch 1 oder 2,
dadurch **gekennzeichnet,** daß die Einstellglieder (68) Schrauben sind.

4. Werkzeugträgeranordnung nach einem der Ansprüche 1 bis 3,
dadurch **gekennzeichnet,** daß jeder mit seitlichen Ansätzen (66) versehene Werkzeughalter (34) eine Einspannvorrichtung (56) für ein Werkzeug (62) aufweist, dessen Achse (58) die Achse (30) des Schafts (40) rechtwinklig schneidet, und daß die seitlichen Ansätze (66) beide auf derselben Seite der gemeinsamen Ebene dieser beiden Achsen (30, 58) angeordnet sind.

## Claims

1. Tool carrier arrangement, in particular for lathes, comprising
- a tool carrier, in particular turret head (14), which between two end faces (18, 20) comprises a plurality of clamping faces (26), from each of which an insert hole (28) extends,
- a plurality of interchangeable tool holders (34) which each comprise a housing (36) having an engagement face (38) for engaging one of the clamping faces (26) and a shank (40) for insertion into a respective one of the insert holes (28), and
- shank clamps (44, 46) each associated with one of the insert holes (28) and formed for clamping an inserted shank (40),
characterized in that
- at least one of the tool holders (34) has two lateral extensions (66) which each engage over an end face edge (22, 24) of the tool carrier (14) and bear thereon, and
- that on each of the lateral extensions (66) an adjusting member (68) is mounted which can be clamped against the adjacent end face edge (22, 24) of the tool carrier (14) and is arranged in such a manner that in the clamped state it exerts on the tool holder (34) a reaction force eccentric with respect to the associated shank (40).

2. Tool carrier arrangement according to claim 1, characterized in that the end face edges (22, 24) of the tool carrier (14) in their regions cooperating with the adjustment members (68) are radially outwardly converging inclined faces.

3. Tool carrier arrangement according to claim 1 or 2, characterized in that the adjustment members (68) are screws.

4. Tool carrier arrangement according to any one of claims 1 to 3,
characterized in that each tool holder (34) provided with lateral extensions (66) comprises a chuck means (56) for a tool (62), the axis (58) of which intersects the axis (30) of the shank (40) at right angles, and that the lateral extensions (66) are both arranged on the same side of the common plane of said two axes (30, 58).

## Revendications

1. Système porteur d'outils, notamment pour tours, comprenant
- un support d'outils, notamment une tête revolver ou tourelle (14) présentant plusieurs faces d'ablocage (26) situées entre deux faces d'extrémité (18, 20) et de chacune desquelles part un trou d'emboîtement (28),
- plusieurs porte-outils (34) interchangeables possédant chacun un corps (36) avec une face de contact (38) destinée à être appliquée contre l'une des faces d'ablocage (26), ainsi qu'une tige (40) destinée à être introduite dans l'un des trous d'emboîtement (28) et
- des organes bloqueurs de tige (44, 46) coordonnés chacun à l'un des trous d'emboîtement (28) et conçus pour le serrage d'une tige (40) introduite,
caractérisé en ce que
- au moins l'un des porte-outils (34) présente deux talons latéraux (66) s'étendant chacun par-dessus un bord (22, 24) d'une face d'extrémité du support d'outils (14) et s'appuyant sur ce bord et
- sur chacun des talons latéraux (66) est monté un organe de positionnement (68) pouvant être serré contre le bord (22, 24) voisin d'une face d'extrémité du support d'outils (14) et agencé de manière à exercer sur le support d'outils (34), à l'état serré, une force de réaction excentrée par rapport à la tige (40) correspondante.

2. Système porteur d'outils selon la revendication 1, caractérisé en ce que, dans leurs zones coopérant avec les organes de positionnement (68), les bords (22, 24) des faces d'extrémité du support d'outils (14) sont des faces obliques qui convergent radialement vers l'extérieur.

3. Système porteur d'outils selon la revendication 1 ou 2, caractérisé en ce que les organes de positionnement (68) sont des vis.

4. Système porteur d'outils selon une des revendications 1 à 3, caractérisé en ce que chaque porte-outil (34), pourvu de talons latéraux (66), possède un dispositif de serrage (56) pour un outil (62), dispositif dont l'axe (58) coupe l'axe (30) de la tige (40) à angle droit, et que les talons latéraux (66) sont disposés tous deux du même côté du plan commun de ces deux axes (30, 58).
